# EUROPEAN PATENT SPECIFICATION

(11) **EP 1 376 158 B1**
(45) Date of publication and mention of the grant of the patent: **15.03.2006**
(21) Application number: 03013440.7
(22) Date of filing: 23.06.2003
(51) Int. Cl.: G02B 5/22, G02C 7/10, B29D 11/00

(54) **Dyeing method and dyeing device of lens**
Vorrichtung und Verfahren zur Färbung einer Linse
Appareillage et méthode de coloration d'une lentille

(30) Priority: 26.06.2002 JP 2002185564
(43) Date of publication of application: 02.01.2004
(73) Proprietor: HOYA CORPORATION, Shinjyuki-ku Tokyo 161-8525 (JP)
(72) Inventor: Kubodera, Takaaki, c/o Hoya Corporation, Shinjyuku-ku, Tokyo 161-8525 (JP); Samukawa, Masahiko, c/o Hoya Corporation, Shinjyuku-ku, Tokyo 161-8525 (JP)
(74) Representative: Albrecht, Thomas

(56) References cited:
- FR-A- 2 436 113
- US-A- 4 155 734
- US-A- 4 227 910
- US-A- 5 096 457
- US-A- 5 340 399
- US-A- 5 560 751
- US-A- 6 129 042

## Description

### [Detailed Description of the Invention]

### [Technical Field to which the Invention Belongs]

The present invention relates to a method of dyeing a lens and a dyeing device, and more particularly, to a method and a device suitable for subjecting a lens to half dyeing.

### [Prior Art]

As method of dyeing a lens, there is known a method in which a dye coating is formed on the surface of a lens and then heated to diffuse the dye into the lens. As an example for this, JP-A-8-20080 and JP-A-2000-314801 describe a method in which a coating of a dye is formed on the surface of a lens, and the resulting lens is placed on a doughnut-like jig that can be fixed in the surrounding of the lens, such that a convex surface of the lens is positioned downward, and heated for dyeing in an oven.

### [Problem that the Invention is to Solve]

However, though according to the method as described in these patent documents, it is possible to perform entire dyeing of lens, these patent documents do not specifically propose a method of subjecting a lens to half dyeing often employed for spectacle lenses (lenses whose coloring density changes).
Documents US 5,560,751 and US 4,155,734 disclose prior art dyeing methods. An object of the invention is to provide a method of dyeing a dye coated lens upon heating, in which the lens is subjected to half dyeing, and a device therefor.

### [Means for Solving the Problem]

In order to achieve the foregoing object, the present inventor made extensive and intensive investigations. As a result, it has been found that the foregoing object can be achieved by using a heating furnace provided with an opened insertion port for inserting a lens into a bottom section thereof; setting up a state within the heating furnace such that the temperature becomes high from the vicinity of the insertion port toward the inside of a frame section thereof; inserting a part or the whole of a dye coated lens from the insertion port into the furnace inside of the heating furnace in that state; and heating the lens, leading to accomplishment of the invention.

Specifically, the invention provides the following.
(1) A dyeing method of lens, comprising a coating formation step of forming a dye coating on the surface of a lens and a heating and diffusion step of heating the dye coated lens to diffuse the dye into the lens by a heating furnace having a frame section forming a space, a heating section provided within the frame section, and an opened insertion port for inserting the lens provided on the bottom surface of the frame section, and further comprising a heating furnace temperature setting step of setting up a state within the heating furnace such that the temperature becomes high from the vicinity of the insertion port toward the inside of the frame section, the heating and diffusion step being a step of inserting a part or the whole of the dye coated lens from the insertion port into a furnace inside of the heating furnace from the lower portion of the heating furnace having the state set up therein, to heat the lens.
(2) The dyeing method of lens set forth in (1) as above, wherein in the heating and diffusion step, a part or the whole of the dye coated lens is inserted from the insertion port into the furnace inside of the heating furnace, to heat the lens while moving it in the vertical direction.
(3) The dyeing method of lens as set forth in (1) or (2) as above, wherein a heating furnace further provided with a cooling mechanism in a position corresponding to a portion within the frame section not requiring coloration of the lens is used.
(4) A dyeing device comprising a heating furnace having a frame section forming a space, a heating section provided within the frame section, and an opened insertion port for inserting a lens provided on the bottom surface of the frame section; a lens-holding mechanism for holding a dye coated lens; and a lens-moving mechanism for moving the lens-holding mechanism to insert a part or the whole of the held lens from the insertion port into a furnace inside of the heating furnace.
(5) The dyeing device as set forth in (4) as above, wherein the heating furnace is one further provided with a cooling mechanism in a position corresponding to a portion within the frame section not requiring coloration of the lens.
(6) The dyeing device as set forth in (4) or (5) as above,
wherein the lens-moving mechanism is one further provided with controlling means for controlling the insertion position of the lens into the furnace inside.

### [Mode for Carrying Out the Invention]

In the invention, the first step is a coating formation step of forming a dye coating on the surface of a lens. In this step, for example, the methods as disclosed in JP-A-8-20080 and JP-A-2000-314801 are employed. Specific examples of the method include a method in which a dyeing solution containing a disperse dye is prepared, and the dyeing solution is applied by brush coating, spin coating, ink jetting, etc.; and a method in which a dyeing solution containing a disperse dye and a water-soluble polymer is prepared, and a lens is immersed in the dyeing solution at room temperature.
As a medium of the dyeing solution, aqueous media are preferably used from the viewpoint that the lens surface is not roughened and from the working viewpoint.

As the dye to be used for the dyeing solution, disperse dyes that have hitherto been used for coloring a lens are preferably used. Examples include Dianix Blue AC-E and Dianix Red AC-E, each of which is manufactured by DyStar Japan Ltd., and Kayalon Polyester Colours Yellow 4G-E and Kayalon Polyester Colours Scarlet 2R-E, each of which is a disperse dye manufactured by Nippon Kayaku Co., Ltd.
In the case where a water-soluble polymer as described later is not added, the dye concentration is preferably 10 % by weight or more, and particularly preferably 20 % by weight or more based on the total weight of the dye solution, but is not limited thereto. In the case where a water-soluble polymer as described later is added, the dye concentration is usually selected from the range of from 0.1 to 20 % by weight, and preferably from 3 to 10 % by weight.

Similar to the case of the invention as disclosed in the above-cited JP-A-2000-314801, it is possible to add a water-soluble polymer to the dyeing solution.
Examples of the water-soluble polymer include polyvinyl alcohol, polyacrylic acid, polyacrylic acid metal salts, polyacrylamide, polyvinylpyrrolidone, polyethylene glycol, and polyoxyethylene alkyl ethers. Of these are particularly preferable polyvinyl alcohol and polyethylene glycol because they are safe and inexpensive. These water-soluble polymers may be used singly or in combination of two or more thereof.
The water-soluble polymer plays a role such that it increases the viscosity of the dyeing solution to make the dyeing solution adhered onto the lens surface difficult to flow and that after the heat treatment, when the lens surface is washed with water, it makes the residual disperse dye on the surface easy to remove. Also, since the water-soluble polymer is poor in affinity with the disperse dye, it plays a role such that it makes the disperse dye easy to penetrate and diffuse into the inside of the lens upon heating.
It is advantageous to dissolve the water-soluble polymer in the aqueous medium before the addition of the disperse dye. This is because though the disperse dye can be used in a state that it is not completely dissolved in the aqueous medium but partly suspended therein, since it is necessary to use the water-soluble polymer in a state that it is completely dissolved in the aqueous medium, it must be confirmed that the water-soluble polymer is dissolved in a state of a colorless transparent aqueous solution. The amount of the water-soluble polymer to be dissolved is usually selected within the range of from 0.1 to 50 parts by weight, and preferably from 1 to 10 parts by weight based on 100 parts by weight of the total amount of the dye solution. Since the water-soluble polymer generally has a low dissolution rate in water, it must be completely dissolved by forced agitation or long-term agitation. As the aqueous medium, water is used. However, if desired, so far as the purpose of the invention is not hindered, it is also possible to use water to which is properly added an organic solvent having miscibility in water.

Besides the foregoing water-soluble polymer, surfactants falling outside the concept of the water-soluble polymer can be added. As the surfactant, is preferable a nonionic surfactant. In the case where the water-soluble polymer is not added, the addition amount of the surfactant is preferably from 1 to 30 parts by weight based on 100 parts by weight of the total amount of the dye solution. In the case where the water-soluble polymer is added, the addition amount of the surfactant is preferably from 5 to 20 parts by weight based on 100 parts by weight of the total amount of the dye solution.

The lens to which the dyeing method of the invention is applied is an optical plastic lens inclusive of optical lenses such as contact lenses, spectacle lenses, camera lenses, projector lenses, telescope lenses, and magnifying lenses. Of these are particularly suitable lenses for visual acuity correction such as contact lenses and spectacle lenses. Specifically, lenses made of, for example, polydiethylene glycol bisallyl carbonate, a methyl methacrylate homopolymer, a copolymer of methyl methacrylate and at least one other monomer, a polycarbonate, polystyrene, polyethylene terephthalate, polyurethane, polythiourethane, or other sulfur-containing polymer can be enumerated.
The temperature of the dyeing solution during the formation of the dye coating is preferably a temperature at which the dye does not diffuse into a lens substrate from the viewpoint of controlling the degree of coloration of the lens.

The lens, on the surface of which is formed a dye coating with the dyeing solution by the method as described above, is provided for the heating and diffusion step of diffusing the dye into the lens upon heating to dye the lens, whereby the lens is dyed. In the method of the invention, a heating furnace having a frame section forming a space, a heating section provided within the frame section, and an opened insertion port for inserting the lens provided on the bottom surface of the frame section is used in the heating and diffusion step; and a heating furnace temperature setting step of setting up a state within the heating furnace such that the temperature becomes high from the vicinity of the insertion port toward the inside of the frame section is provided, whereby the heating and diffusion step is carried out by inserting a part or the whole of the dye coated lens from the insertion port into a furnace inside of the heating furnace from the lower portion of the heating furnace having the state set up therein, to heat the lens.
After completion of the heating, the residual dye coating can be removed by washing with water or by a cleaning solution.

### [Brief Description of the Drawings]

[Fig. 1] A perspective view showing one example of the dyeing device to be used in the invention, which shows a state before inserting a lens from a lens insertion port into an furnace inside.
[Fig. 2] A perspective view of the dyeing device as shown in Fig. 1, showing a state that the lens is inserted from the lens insertion port into the furnace inside.
[Fig. 3] A perspective view of another example of the dyeing device to be used in the invention, in which the dyeing device as shown in Fig. 1 is further provided with a cooling mechanism, showing a state before inserting the lens from the lens insertion port into the furnace inside.
[Fig. 4] A perspective view of the dyeing device as shown in Fig. 3, showing a state that the lens is inserted from the lens insertion port into the furnace inside.
[Fig. 5] A drawing showing the temperature distribution when the temperature within the furnace is set up at 130°C in the state as shown in Fig. 3.
[Fig. 6] A perspective view showing the lens colored by the method and device of the invention.

### [Description of Reference Numerals and Signs]

1: Dyeing device
10: Heating furnace
11: Frame section
12: Furnace inside
13: Heater
14: Lens insertion port
20: Lens-holding mechanism
21: Lens
22: Shaft section
23: Lens-holding tool
24: Horizontal member
30: Lens-moving mechanism
31: Screwed shaft
32: Pulse motor
33: Pulley
34: Belt
35: Non-screwed shaft
36: Moving member
40: Cooling mechanism
41: Cooling pipe
50: Supporting stand
60: Control section

Next, the dyeing device to be used in the method of the invention will be described with reference to the drawings.

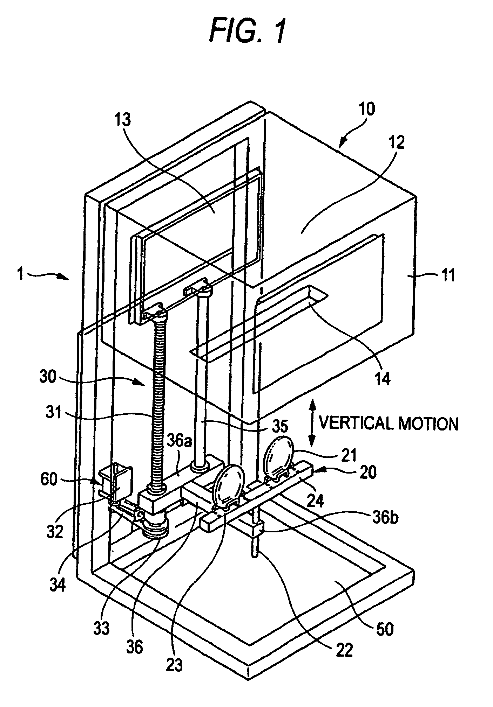

Fig. 1 is a perspective view showing one example of the dyeing device as used in the invention, which shows a state before inserting a lens from a lens insertion port into an furnace inside.
A device 1 is basically constructed of a heating furnace 10, a lens-holding mechanism 20, and a lens-moving mechanism 30, which are supported by a supporting stand 50.
The heating furnace 10 has a frame section 11 to form a space and a heater 13 provided on the side surface of the frame section 11. A furnace inside 12 forms a space for heating a dye coated lens. Further, on the bottom surface of the frame section 11, a lens insertion port 14 for inserting the lens is provided in an opened state. The shape of the frame section is not limited to a rectangular parallelepiped as shown in Fig. 1 but may be a cube or other shape.
In the invention, it is important that in the heating furnace 10, the lens insertion port 14 is provided on the bottom surface of the frame section 11. Namely, air heated by the heater 13 moves upward within the furnace inside 12. Further, since in the furnace inside 12, only the lens insertion port 14 positioned in the lower portion is opened, and the others are sealed, the temperature in the vicinity of the lens insertion port 14 is low, and the temperature becomes high toward the inside.
In the invention, the lens is heated and subjected to half dyeing by utilizing a temperature distribution of the furnace inside 12 set up in the heating furnace temperature setting step.

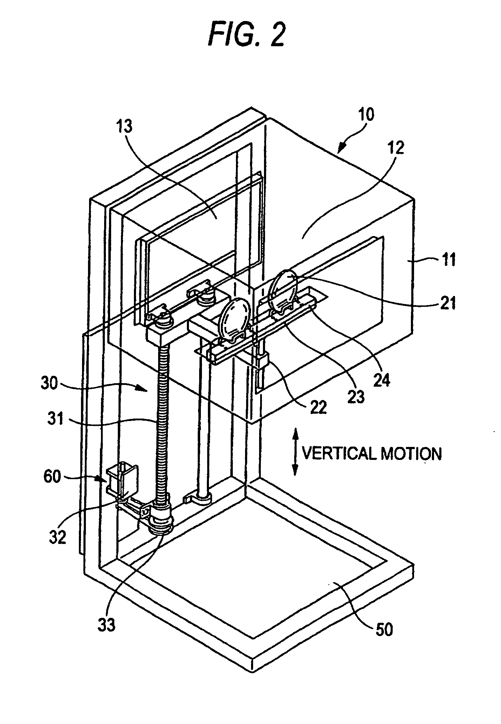

Fig. 2 is a perspective view of the dyeing device 1 as shown in Fig. 1, showing a state that the lens 21 is inserted from the lens insertion port into the furnace inside 12. When a dye coated lens 21 is inserted from the lens insertion port 14 into the furnace inside 12, the temperature of the furnace inside 12 becomes high upward from a portion where the lens is held. Accordingly, the tip of the lens far from the portion where the lens is held (the upper portion in the drawing) is heated most highly, and the heating temperature becomes low toward the portion where the lens is held (the lower portion in the drawing) . Thus, the tip of the lens far from the portion where the lens is held is colored most deeply, and the coloration of the lens becomes pale downward.

In the case where the lens has a portion where no coloration is necessary, a cooling mechanism 40 is provided in a position corresponding to a portion within the frame section 11 not requiring coloration.

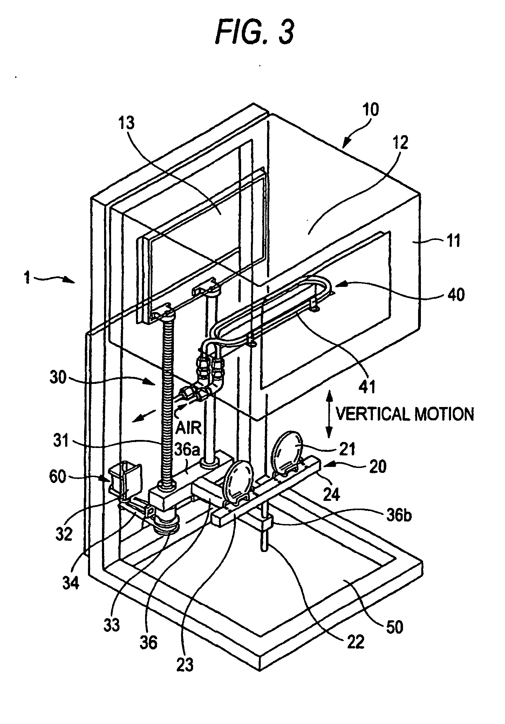

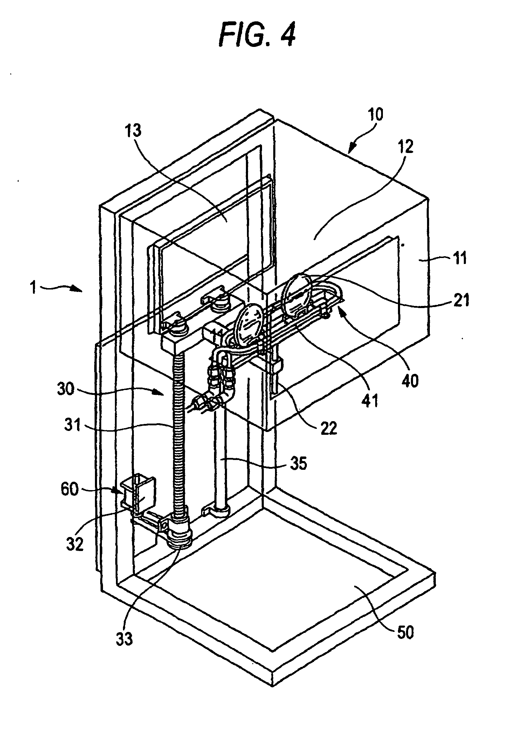

Fig. 3 is a perspective view of the dyeing device 1 as shown in Fig. 1, which is further provided with a cooling mechanism 40, showing a state before inserting the lens 21 from the lens insertion port into the furnace inside 12; and Fig. 4 is a perspective view showing a state that the lens 21 is inserted from the lens insertion port into the furnace inside 12.
In the case of these drawings, a cooling mechanism 40 composed of an oval cooling pipe 41 is provided in the surrounding of the lens insertion port 14 of the furnace inside 12. This cooling mechanism has a structure in which a cooling medium such as water and air is circulated within the cooling pipe 41, and cools the corresponding portion of the lens 21 such that it is not colored. The material constituting the cooling pipe 41 is not particularly limited, but a material having good heat conductivity, such as copper, may be used.
The temperature of the furnace inside 12 is not particularly limited, but taking into consideration the coloration speed of the lens and the heat resistance of the lens, is preferably in the range of from 90 to 150 °C. In order to detect and control the temperature of the furnace inside 12, a thermometer can be provided in an arbitrary position.

The lens-holding mechanism 20 is basically constructed of a horizontal member 24 for holding the lower ends of the two lenses 21 to hold them such that the lenses 21 can be inserted into the lens insertion port 14; a shaft section 22 extending in the vertical direction of the central position on the bottom surface of the horizontal member 24; and lens-holding tools 23 each provided on the upper surface of the horizontal member 24 for the purpose of holding the lens. The shaft section 22 and a moving member 36 of the lens-moving mechanism 30 are detachable from each other.
Incidentally, in order to make the furnace inside 12 have a proper temperature distribution, it is preferred that a part of the lens insertion port 14 is opened even in a state that the lens-holding mechanism 20 is moved to insert a part or the whole of the lens into the furnace inside 12, and it is preferred to regulate the size of the horizontal member 24 and the size of the lens insertion port 14. The position on the bottom surface on which the lens insertion port 14 is provided is not particularly limited, so far as the temperature of the furnace inside 12 increases from the vicinity of the lens insertion port 14 toward the upper portion of the furnace inside 12. Further, the shape of the lens insertion port 14 is not particularly limited so far as the lens can be inserted, and the foregoing temperature distribution is attained.

The lens-moving mechanism 30 is provided for vertically moving the lens between the setting position of the lens as shown in Figs. 1 and 3 and the setting position of the lens in the furnace inside 12 of the heating furnace 10 as shown in Figs. 2 and 4. The lens-moving mechanism 30 is basically constructed of the T-shaped moving member 36 to support the shaft section 22 of the lens-holding mechanism 20; two shafts 31 and 35 by which the moving member 36 vertically moves; a pulse motor 32; a pulley 33; and a belt 34.
In the T-shaped moving member 36, holes for screw engagement and engagement with the shafts 31 and 35 are provided on a member 36a in parallel with the horizontal member 24 of the lens-holding tools 23, and a hole for holding the lens-holding tools 23 is provided on a member 36b perpendicular to the horizontal member 24 of the lens-holding tools 23. The shafts 31 and 35 are provided in the direction of the heating furnace 10 from the supporting stand such that the lenses 21 can move into the furnace inside 12 of the heating furnace 10.
Of the two shafts, one shaft 31 is provided with screw threads in the surrounding thereof. The member 36a of the moving member 36 to be screw engaged with the screwed shaft 31 is provided with a screwed hole. The shaft 31 is provided with the pulley 33 in the lower end thereof and connected to the pulse motor 32 via the belt 34. Of the two shafts, another shaft 35 is not provided with any screw thread. In such construction, when the pulse motor 32 is driven, it is possible to vertically move the lenses 21. In addition, when a control section 60 is connected to the pulse motor 32, it is possible to control the height position of the lens 21 by the time, if desired.
The supporting stand 50 is provided for the purpose of supporting the heating furnace 10, the lens-holding mechanism 20, and the lens-moving mechanism 30.

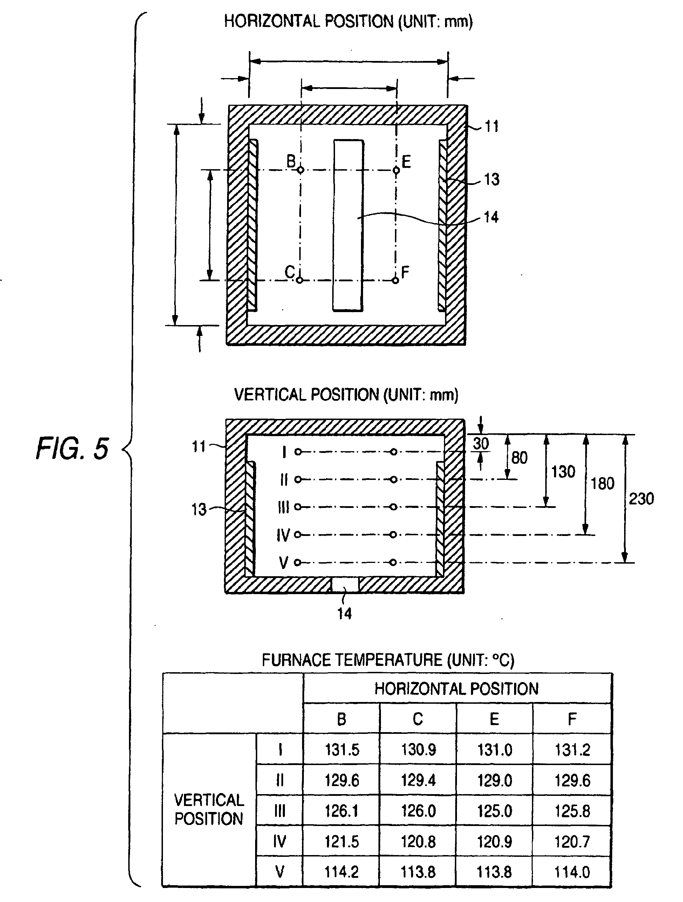

Fig. 5 shows a temperature distribution of the furnace inside 12 (33 by 36 by 26 centimeters) when the setting temperature is 130 °C in the device and state as shown in Fig. 3, with respect to the measurement positions of the temperature and the temperature of each of the positions.
As shown in Fig. 5, with respect to the temperature distribution of the furnace inside 12, the temperature in the vicinity of the lens insertion port 14 is lower, and the temperature becomes high inward. With respect to the lens as inserted, the portion in the tip of the lens far from the portion where the lens is held is high, and the temperature becomes low toward the position where the lens is held. From this matter, it can be confirmed that the temperature distribution is suitable for half dyeing of lens.

### [Example]

Next, the invention will be described below in more detail with reference to the following Example, but it should not be construed that the invention is limited thereto.

### Example 1:

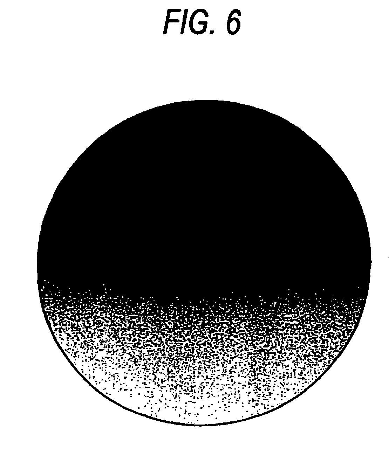

A dyeing solution in the state of room temperature, made of 70 % by weight of pure water, 20 % by weight of dyes [Sumikaron Orange SE-RPD (a trade name; a selling agency: Sumitomo Chemical Co., Ltd.), Diacelliton Fast Yellow GL (a trade name; a selling agency: DyStar Japan Ltd.), Dianix Blue AC-E (a trade name; a selling agency: DyStar Japan Ltd.), and Disperse Red 802 (a trade name; a selling agency: Futaba Sangyo Co., Ltd.)], and 10 % by weight of a water-soluble polymer [polyoxyethylene alkyl ether (a trade name: NIKKOL BT-7, manufactured by Nihon Surfactant Kogyo K.K.)], was applied on an Eyry (a trade name, manufactured by Hoya Corporation; refractive index: 1.71, diameter: 80 mmφ) substrate to obtain a dye coated lens.
This lens was heated and dyed by the dyeing device as shown in Figs. 1 and 2.
First, the lens was held by the lens-holding mechanism, moved by the lens-moving mechanism, inserted from the lens inserting port into the furnace inside (12) having the temperature distribution as shown in Fig. 5 at a setting temperature of 130 °C, and dyed upon heating for 60 minutes.
As a result, there was obtained a deeply colored lens of half coloration as shown in Fig. 6. (The coloring density gradually changes to deep upward.) Incidentally, in this Example, the lens was colored without using the foregoing cooling device.

### Comparative Example 1:

A lens was colored using the same dyeing solution as in Example 1 in the conventionally known method, i.e., a method of half dyeing by immersing the Eyry substrate in the dyeing solution heated at 90 °C. As a result, even after an elapse of 5 hours, the same colored lens could not be obtained.

### [Advantage of the Invention]

According to the invention, it is possible to efficiently subject a lens to half dyeing.

## Claims

1. A dyeing method of lens, comprising a coating formation step of forming a dye coating on the surface of a lens and a heating and diffusion step of heating the dye coated lens to diffuse the dye into the lens **characterised in that** the dye is diffused into the lens by a heating furnace 110) having a frame section (11) forming a space, a heating section provided within the frame section (11), and an opened insertion port (14) for inserting the lens provided on the bottom surface of the frame section (11), and further comprising a heating furnace temperature setting step of setting up a temperature distribution section within the heating furnace (10) such that the temperature becomes high from the vicinity of the insertion port (14) toward the inside of the frame section (11), the heating and diffusion step being a step of inserting a part or the whole of the dye coated lens from the insertion port (14) into a furnace inside (12) of the heating furnace (10) from the lower portion of the heating furnace (10) having the state set up therein, to heat the lens.

2. The dyeing method of lens according to claim 1, wherein in the heating and diffusion step, a part or the whole of the dye coated lens is inserted from the insertion port (14) into the furnace inside (12) of the heating furnace (10), to heat the lens while moving it in the vertical direction.

3. The dyeing method of lens according to claim 1 or 2, wherein a heating furnace (10) further provided with a cooling mechanism (40) in a position corresponding to a portion within the frame section (11) not requiring coloration of the lens is used.

4. A device (1) for dyeing a lens comprising a heating furnace (10) having a frame section (11) forming a space, a heating section provided within the frame section (11), and an opened insertion port (14) for inserting a lens provided on the bottom surface of the frame section (11), means for setting up a temperature distribution section within the heating furnace (10) such that the temperature becomes high from the vicinity of the insertion port (14) toward the inside of the frame section (11); a lens-holding mechanism (20) for holding a dye coated lens; and a lens-moving mechanism (30) for moving the lens-holding mechanism (20) to insert a part or the whole of the held lens from the insertion port (14) into said temperature distribution section of the furnace inside (12) of the heating furnace (10).

5. The dyeing device (1) according to claim 4, wherein the heating furnace (10) is further provided with a cooling mechanism (40) in a position corresponding to a portion within the frame section (11) not requiring coloration of the lens.

6. The dyeing device (1) according to claim 4 or 5, wherein the lens-moving mechanism (30) is further provided with controlling means (60) for controlling the insertion position of the lens into the furnace inside (12).

## Patentansprüche

1. Verfahren zum Färben einer Linse, umfassend eine Beschichtungsbildungsstufe des Bildens einer Farbstoffbeschichtung auf der Oberfläche einer Linse und einer Erwärmungs- und Diffusionsstufe des Erwärmens der Farbstoff-beschichteten Linse, um den Farbstoff in die Linse zu diffundieren, **dadurch gekennzeichnet, dass** der Farbstoff durch einen Heizofen (10) in die Linse diffundiert wird, der einen Rahmenabschnitt (11), der einen Hohlraum bildet, einen Heizabschnitt, der in dem Rahmenabschnitt (11) vorgesehen ist, und eine geöffnete Einsetzöffnung (14) zum Einsetzen der Linse, die an der Bodenfläche des Rahmenabschnitts (11) vorgesehen ist, aufweist, und das Verfahren des Weiteren eine Heizofentemperatur-Einstellstufe des Bildens eines Temperaturverteilungsabschnitts im Heizofen (10) derart, dass die Temperatur von der Nähe der Einsetzöffnung (14) in Richtung des Inneren des Rahmenabschnitts (11) hoch wird, umfasst, wobei die Erwärmungs- und Diffusionsstufe eine Stufe des Einsetzens eines Teils der oder der gesamten Farbstoff-beschichteten Linse von der Einsetzöffnung (14) in ein Ofeninneres (12) des Heizofens (10) vom unteren Teil des Heizofens (10) mit dem darin gebildeten Zustand ist, um die Linse zu erwärmen.

2. Verfahren zum Färben einer Linse nach Anspruch 1, wobei in der Erwärmungs- und Diffusionsstufe ein Teil der Farbstoff-beschichteten Linse oder die gesamte Farbstoffbeschichtete Linse von der Einsetzöffnung (14) in das Ofeninnere (12) des Heizofens (10) eingeführt wird, um die Linse zu erwärmen, während sie in der vertikalen Richtung bewegt wird.

3. Verfahren zum Färben einer Linse nach Anspruch 1 oder 2, wobei ein Heizofen (10) verwendet wird, der des Weiteren mit einem Kühlmechanismus (40) in einer Position versehen ist, die einer Position in dem Rahmenabschnitt (11) entspricht, die keine Färbung der Linse erfordert.

4. Vorrichtung (1) zum Färben einer Linse, umfassend einen Heizofen (10) mit einem Rahmenabschnitt (11), der einen Hohlraum bildet, einen Heizabschnitt, der in dem Rahmenabschnitt (11) vorgesehen ist, und eine geöffnete Einsetzöffnung (14) zum Einsetzen einer Linse, die an der Bodenfläche des Rahmenabschnitts (11) vorgesehen ist; Mittel zum Bilden eines Temperaturverteilungsabschnitts in dem Heizofen (10) derart, dass die Temperatur von der Nähe der Einsetzöffnung (14) in Richtung des Inneren des Rahmenbereichs (11) hoch wird; einen Linsenhaltemechanismus (20) zum Halten einer Farbstoff-beschichteten Linse; und einen Linsenbewegungsmechanismus (30) zum Bewegen des Linsenhaltemechanismus (20), um einen Teil der gehaltenen Linse oder die gesamte gehaltene Linse von der Einsetzöffnung (14) in den Temperaturverteilungsabschnitt des Ofeninneren (12) des Heizofens (10) einzuführen.

5. Färbevorrichtung (1) nach Anspruch 4, wobei der Heizofen (10) des Weiteren mit einem Kühlmechanismus (40) in einer Position versehen ist, die einer Position in dem Rahmenabschnitt (11) entspricht, die keine Färbung der Linse erfordert.

6. Färbevorrichtung (1) nach Anspruch 4 oder 5, wobei der Linsenbewegungsmechanismus (30) des Weiteren mit einem Steuerungsmittel (60) zum Steuern der Einsetzposition der Linse in das Ofeninnere (12) versehen ist.

## Revendications

1. Procédé de coloration de lentille, comprenant une étape de formation d'enduit pour la formation d'un enduit de colorant sur la surface d'une lentille, et une étape de chauffage et de diffusion pour le chauffage de la lentille enduite de colorant afin de diffuser le colorant dans la lentille, **caractérisé en ce que** le colorant est diffusé dans la lentille par un four de chauffage (10) présentant une section cadre (11) formant un espace, une section chauffage présente à l'intérieur de la section cadre (11) et un orifice d'insertion ouvert (14) pour l'insertion de la lentille présent sur la surface de fond de la section cadre (11), et comprenant en outre une étape de réglage de température du four de chauffage pour configurer une section de distribution de température à l'intérieur du four de chauffage (10) de telle sorte que la température augmente depuis le voisinage de l'orifice d'insertion (14) vers l'intérieur de la section cadre (11), l'étape de chauffage et de diffusion étant une étape d'insertion d'une partie ou de la totalité de la lentille enduite de colorant depuis l'orifice d'insertion (14) vers l'intérieur de four (12) du four de chauffage (10) dont l'état a été configuré afin de chauffer la lentille.

2. Procédé de coloration de lentille selon la revendication 1, dans lequel, durant l'étape de chauffage et de diffusion, une partie ou la totalité de la lentille enduite de colorant est insérée depuis l'orifice d'insertion (14) vers l'intérieur de four (12) du four de chauffage (10), afin de chauffer la lentille tout en la mouvant dans la direction verticale.

3. Procédé de coloration de lentille selon la revendication 1 ou 2, dans lequel un four de chauffage (10) pourvu en outre d'un mécanisme de refroidissement (40), à un emplacement correspondant à une partie de l'intérieur de la section cadre (11) ne nécessitant pas la coloration de la lentille, est utilisé.

4. Dispositif (1) de coloration d'une lentille comprenant un four de chauffage (10) ayant une section cadre (11) formant un espace, une section chauffage présente à l'intérieur de la section cadre (11), et un orifice d'insertion ouvert (14), pour l'insertion de la lentille, présent sur la surface de fond de la section cadre (11), des moyens de configuration d'une section de distribution de température à l'intérieur du four de chauffage (10) de telle sorte que la température augmente depuis le voisinage de l'orifice d'insertion (14) vers l'intérieur de la section cadre (11) ; un mécanisme de support de lentille (20) pour supporter une lentille enduite de colorant, et un mécanisme de déplacement de lentille (30) pour mouvoir le mécanisme de support de lentille (20) afin d'insérer une partie ou la totalité de la lentille supportée depuis l'orifice d'insertion (14) vers ladite section de distribution de température dans l'intérieur de four (12) du four de chauffage (10).

5. Dispositif de coloration (1) selon la revendication 4, dans lequel le four de chauffage (10) est également pourvu d'un mécanisme de refroidissement (40), à un emplacement correspondant à une partie de l'intérieur de la section cadre (11) ne nécessitant pas la coloration de la lentille.

6. Dispositif de coloration (1) selon la revendication 4 ou 5, dans lequel le mécanisme de déplacement de lentille (30) est également pourvu de moyens de commande (60) destinés à déterminer l'emplacement d'insertion de la lentille dans l'intérieur de four (12).
